# FASCICULE DE BREVET EUROPEEN

(11) **EP 3 476 677 B1**
(45) Date de publication et mention de la délivrance du brevet: **29.09.2021**
(21) Numéro de dépôt: 18202995.9
(22) Date de dépôt: 26.10.2018
(51) Int. Cl.: B64C 25/40

(54) **EQUIPEMENT ELECTRIQUE DESTINE A ETRE RELIE A UN ACTIONNEUR ELECTROMECANIQUE DE FREINAGE ET A UN ACTIONNEUR ELECTROMECANIQUE D'ENTRAINEMENT**
ELEKTRISCHE AUSRÜSTUNG FÜR DIE VERBINDUNG MIT EINEM ELEKTROMECHANISCHEN BREMSSTELLGLIED UND EINEM ELEKTROMECHANISCHEN ANTRIEBSSTELLGLIED
ELECTRICAL EQUIPMENT TO BE CONNECTED TO A BRAKING ELECTROMECHANICAL ACTUATOR AND A DRIVE ELECTROMECHANICAL ACTUATOR

(30) Priorité: 30.10.2017 FR 1760206
(43) Date de publication de la demande: 01.05.2019
(73) Titulaire: Safran Landing Systems, 78140 Vélizy-Villacoublay (FR)
(72) Inventeur: GOYEZ, Brian, 78140 VELIZY-VILLACOUBLAY (FR)
(74) Mandataire: Lavaud, Thomas

(56) Documents cités:
- EP-A1- 2 327 595
- EP-A1- 3 121 077
- EP-A2- 2 666 717
- WO-A1-2007/027588
- US-A1- 2006 065 779
- US-A1- 2008 258 014

## Description

L'invention concerne le domaine des équipements électriques destinés à être reliés à un actionneur électromécanique de freinage et à un actionneur électromécanique d'entraînement.

### ARRIERE PLAN DE L'INVENTION

Dans les aéronefs modernes, de nombreuses fonctions, autrefois mises en œuvre grâce à des systèmes purement mécaniques ou hydrauliques, sont effectuées par des systèmes dits « électriques ».

Lorsque ces fonctions ont pour but d'entraîner une pièce mobile, les systèmes électriques comportent un actionneur électromécanique ou un actionneur électro-hydrostatique. Ainsi, certains aéronefs modernes sont équipés d'un système de commandes de vol électrique ou d'un système de freinage électrique.

Dans ce contexte, il est envisagé d'équiper certains aéronefs modernes avec un système de roulage au sol électrique. Le système de roulage au sol électrique permet de déplacer un aéronef au sol sans utiliser les réacteurs de l'aéronef et sans qu'un tracteur d'aéronef ne soit nécessaire. Un système de roulage au sol électrique entraîne en rotation certaines roues de l'aéronef et comporte pour cela un dispositif d'entraînement comprenant un actionneur électromécanique d'entraînement.

Le document EP3121077 divulgue un système de freinage et de roulage pour aéronef dans lequel un moteur électrique entraîne le système de serrage de frein par l'intermédiaire d'un deuxième arbre de sortie pour appliquer une force à la pile de disques de frein de l'aéronef via un embrayage destiné à mettre en prise sélectivement le moteur électrique avec au moins l'une d'une transmission de force motrice et d'une transmission de frein.

Chaque actionneur électromécanique ou électro-hydrostatique de ces systèmes électriques doit être relié par au moins un bus de puissance à une unité d'alimentation qui alimente un moteur électrique de l'actionneur électromécanique ou électro-hydrostatique, éventuellement par au moins un bus de communication à une unité de traitement qui pilote le moteur électrique, et éventuellement par au moins un bus de communication à un concentrateur de données qui reçoit des mesures réalisées par un capteur de l'actionneur électromécanique ou électro-hydrostatique.

On comprend donc qu'un grand nombre d'unités de puissance, d'unités de traitement et de concentrateurs de données sont intégrés dans les aéronefs modernes, et qu'un grand nombre de bus de puissance et de bus de communication cheminent dans les aéronefs modernes.

La multiplication de ces équipements électriques et de ces bus tend à augmenter la masse et le coût de l'aéronef et à réduire la fiabilité des systèmes électriques dans lesquels ils sont utilisés.

### OBJET DE L'INVENTION

L'invention a pour objet de réduire la masse et le coût d'un aéronef, et d'augmenter sa fiabilité.

### RESUME DE L'INVENTION

En vue de la réalisation de ce but, on propose un équipement électrique destiné à être relié à au moins un actionneur électromécanique de freinage agencé pour freiner une roue d'un atterrisseur d'un aéronef et à au moins un actionneur électromécanique d'entraînement agencé pour entraîner la roue en rotation, l'équipement électrique comportant un boîtier, des moyens de fixation du boîtier à l'atterrisseur et, à l'intérieur du boîtier :
- une unité de traitement agencée pour générer une commande de moteur de freinage à partir d'une consigne de freinage et une commande de moteur d'entraînement à partir d'une consigne de roulage au sol ;
- une unité d'alimentation agencée pour générer une tension d'alimentation d'équipement pour alimenter l'équipement électrique, une tension d'alimentation de freinage et une tension d'alimentation d'entraînement ;
- une unité de conversion de puissance agencée pour générer une tension de pilotage de freinage à partir de la commande de moteur de freinage et de la tension d'alimentation de freinage, et une tension de pilotage d'entraînement à partir de la commande de moteur d'entraînement et de la tension d'alimentation d'entraînement ;
- une unité de distribution agencée pour distribuer la tension de pilotage de freinage à l'actionneur électromécanique de freinage et la tension de pilotage d'entraînement à l'actionneur électromécanique d'entraînement.

L'équipement électrique gère donc à la fois le pilotage du freinage et le pilotage du roulage au sol d'une ou de plusieurs roues de l'atterrisseur de l'aéronef. On réduit donc ainsi le nombre d'équipements électriques nécessaires au freinage et au roulage au sol de l'aéronef.

Pour piloter l'équipement électrique, un unique bus de puissance et un unique bus de communication sont nécessaires. Cet unique bus de puissance et cet unique bus de communication, qui cheminent sur l'atterrisseur et donc qui présentent une longueur relativement importante, remplacent une multitude de bus de puissance et de bus de communication de même longueur. On réduit donc ainsi de manière importante le nombre de bus de puissance et de bus de communication, ainsi que la longueur totale desdits bus.

On voit que l'équipement électrique selon l'invention permet de réduire la masse et le coût de l'aéronef de manière importante, et d'augmenter la fiabilité du système de freinage électrique et du système de roulage au sol électrique de l'aéronef.

L'invention concerne aussi un système comportant deux équipements électriques tels que celui qui vient d'être décrit, un bus de communication et un bus de puissance reliant les deux équipements électriques, un actionneur électromécanique de freinage et un actionneur électromécanique d'entraînement.

L'invention concerne de plus un atterrisseur comportant un système tel que celui qui vient d'être décrit.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux dessins annexés, parmi lesquels :
- la figure 1 représente un système comprenant deux équipements électriques selon l'invention positionnés sur un atterrisseur, deux roues de l'atterrisseur munies chacune d'un frein, et un dispositif d'entraînement des roues ;
- la figure 2 représente un équipement électrique selon l'invention.

### DESCRIPTION DETAILLEE DE L'INVENTION

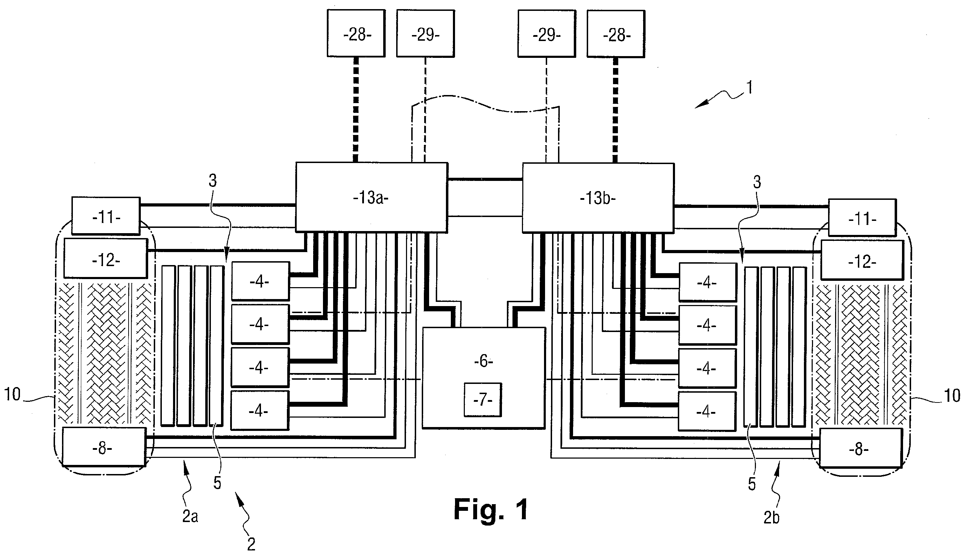

En référence à la figure 1, l'invention est ici mise en œuvre sur un atterrisseur 1 d'un aéronef comprenant deux roues 2a, 2b.

Chaque roue 2 comporte un frein 3 destiné à freiner la roue 2. Le frein 3 comporte un porte-actionneurs sur lequel sont montés quatre actionneurs électromécaniques de freinage 4, et des organes de friction, en l'occurrence une pile de disques de carbone 5.

Les quatre actionneurs électromécaniques de freinage 4 sont utilisés pour appliquer un effort de freinage sur la pile de disques de carbone 5 et exercer ainsi un couple de freinage sur la roue 2 qui ralentit la rotation de la roue 2 et donc freine l'aéronef lorsque celui-ci est au sol.

Chaque actionneur électromécanique de freinage 4 comporte un corps fixé au porte-actionneurs et un poussoir.

Un moteur électrique et un module mécanique sont intégrés à l'intérieur du corps de l'actionneur électromécanique de freinage 4.

Le module mécanique transforme un mouvement de rotation d'un arbre de sortie du moteur électrique en un mouvement linéaire du poussoir.

Le poussoir est actionné par le moteur électrique, via le module mécanique, pour coulisser et appliquer l'effort de freinage sur la pile de disques de carbone 5.

Chaque actionneur électromécanique de freinage 4 comporte de plus un organe de blocage permettant de mettre en œuvre un freinage de parc. L'organe de blocage est agencé pour maintenir l'arbre de sortie du moteur électrique dans une position donnée, de manière à bloquer en position le poussoir.

Un dispositif d'entraînement 6 des roues 2 est positionné au bas de l'atterrisseur 1. Le dispositif d'entraînement 6 comporte un actionneur électromécanique d'entraînement 7. L'actionneur électromécanique d'entraînement 7 comprend un moteur électrique et est agencé pour entraîner les roues 2 en rotation lorsque l'aéronef est au sol.

Des capteurs 8 sont intégrés sur chaque roue 2. Ces capteurs 8 comprennent, pour chaque roue 2, un capteur d'une pression régnant à l'intérieur d'un pneumatique 10 de la roue 2, un capteur d'une température régnant à l'intérieur de la pile de disques de carbone 5 et un capteur d'une vitesse de rotation de la roue 2. Bien sûr, d'autres capteurs peuvent être prévus, par exemple un capteur d'une usure du frein de la roue 2.

Un concentrateur de données 11 est associé à chaque roue 2. Les concentrateurs de données 11 sont positionnés sur l'atterrisseur 1. Les concentrateurs de données 11 reçoivent des mesures réalisées par les capteurs 8, traitent et stockent ces mesures, et réalisent des fonctions de surveillance grâce à ces mesures.

Un ventilateur de frein 12 est intégré dans chaque roue 2. Les ventilateurs de frein 12 permettent de refroidir les piles de disques de carbone 5 entre un atterrissage et un décollage succédant à l'atterrissage. On note que les ventilateurs de frein 12 sont montés optionnellement sur l'aéronef.

Deux équipements électriques selon l'invention 13a, 13b sont positionnés sur l'atterrisseur 1. Un équipement électrique 13a « de gauche » est associé à la roue 2a située à gauche de l'atterrisseur 1 (par rapport à un axe longitudinal d'une jambe de l'atterrisseur 1), et un équipement électrique 13b « de droite » est associé à la roue 2b située à droite de l'atterrisseur 1.

On note cependant ici que le dispositif d'entraînement 6 (et donc l'actionneur électromécanique d'entraînement 7) est piloté par l'équipement électrique 13a. En cas de panne dudit équipement électrique 13a, l'autre équipement électrique 13b se charge de ce pilotage.

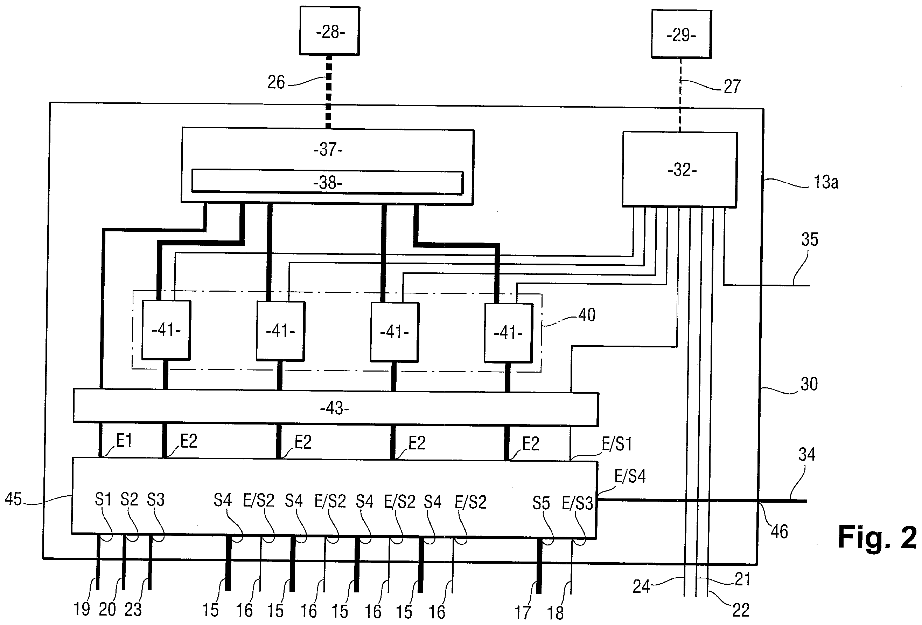

En référence à la figure 2, on décrit ici l'équipement électrique 13a associé à la roue 2a. Bien sûr, ce qui suit est aussi valable pour l'autre équipement électrique 13b associé à l'autre roue 2b.

L'équipement électrique 13a est relié à chacun des quatre actionneurs électromécaniques de freinage 4 du frein 3 de la roue 2a par un câble de haute puissance 15 et par un câble de communication analogique 16, au dispositif d'entraînement 6 par un câble de haute puissance 17 et par un câble de communication analogique 18, au ventilateur de frein 12 par un câble de basse puissance 19, aux capteurs 8 par des câbles de basse puissance 20, des câbles de communication numérique 21 et des câbles de communication analogique 22, au concentrateur de données 11 par un câble de basse puissance 23 et par un câble de communication numérique 24, et à l'autre équipement électrique 13b par un bus de basse puissance 34 et par un bus de communication numérique 35. Chaque câble de communication numérique comprend un ou plusieurs fils sur lesquels circulent des signaux numériques. Chaque câble de communication analogique comprend un ou plusieurs fils sur lesquels circulent des signaux analogiques.

L'équipement électrique 13a est de plus relié au reste de l'aéronef par un bus de haute puissance 26 et par un bus de communication numérique 27.

Le bus de haute puissance 26 transporte une puissance électrique provenant d'un cœur électrique 28 de l'aéronef.

Le bus de communication numérique 27 relie l'équipement électrique 13a à un calculateur 29. Le calculateur 29, intégré dans un réseau avionique de l'aéronef, est positionné dans une baie située dans le fuselage de l'aéronef. Le calculateur 29 appartient à l'ensemble de systèmes de l'ATA42 (Avionique Modulaire Intégrée). Le bus de communication numérique 27 est par exemple un bus numérique de type AFDX ou de type µAFDX.

L'équipement électrique 13a comporte un boîtier 30 et des moyens de fixation du boîtier 30 à l'atterrisseur 1. Ici, le boîtier 30 est fixé sur la jambe de l'atterrisseur 1. Le boîtier 30 se présente sous la forme d'une armoire. L'armoire comporte une porte agencée pour permettre à un opérateur au sol d'accéder à l'intérieur du boîtier 30.

Par « porte », on entend ici tout moyen d'accès susceptible de subir un déplacement entre une position ouverte dans laquelle l'intérieur du boîtier 30 est accessible et une position fermée dans laquelle le moyen d'accès ferme le boîtier 30. Le moyen d'accès est amovible ou non.

L'équipement électrique 13a comporte une unité de traitement 32. L'unité de traitement 32 comporte un ou plusieurs composants de traitement dans lesquels sont programmés un module de contrôle de freinage, un module de contrôle de moteur de freinage, un module de contrôle de roulage au sol, et un module de contrôle de moteur d'entraînement.

Le ou les composants de traitement comportent ici un microcontrôleur et/ou un FPGA et/ou un ASIC et/ou un processeur.

L'unité de traitement 32 reçoit du calculateur 29, via le bus de communication numérique 27, une consigne de freinage. Le module de contrôle de freinage reçoit la consigne de freinage et met en œuvre des lois de commande de freinage de haut niveau, comprenant des boucles lentes, pour produire une commande de freinage. Le module de contrôle de moteur de freinage acquiert la commande de freinage et met en œuvre des boucles d'asservissement rapides de pilotage de moteur, pour produire une commande de moteur de freinage.

L'unité de traitement 32 reçoit aussi des commandes des organes de blocage des actionneurs électromécaniques de freinage 4 de la roue 2a.

L'unité de traitement 32 reçoit de plus du calculateur 29, via le bus de communication numérique 27, une consigne de roulage au sol.

Le module de contrôle de roulage au sol reçoit la consigne de roulage au sol et met en œuvre des lois de commande de roulage au sol de haut niveau, comprenant des boucles lentes, pour produire une commande de roulage au sol. Le module de contrôle de moteur d'entraînement acquiert la commande de roulage au sol et met en œuvre des boucles d'asservissement rapides de pilotage de moteur, pour produire une commande de moteur d'entraînement.

L'unité de traitement 32 reçoit en outre une commande d'activation du ventilateur de frein 12.

L'unité de traitement 32 reçoit des données numériques produites par les capteurs 8 via les câbles de communication numérique 21, des données analogiques produites par les capteurs 8 via les câbles de communication analogique 22, et échange des données numériques avec le concentrateur de données 11 via le câble de communication numérique 24.

L'unité de traitement 32 de l'équipement électrique 13a échange aussi des données numériques avec l'unité de traitement 32 de l'autre équipement électrique 13b via le bus de communication numérique 35.

L'équipement électrique 13a comporte de plus une unité d'alimentation 37. L'unité d'alimentation 37 reçoit du cœur électrique 28, via le bus de haute puissance 26, une puissance d'alimentation générale, c'est à dire un courant d'alimentation générale sous une tension d'alimentation générale.

L'unité d'alimentation 37 produit, à partir de la tension d'alimentation générale, une tension d'alimentation basse et une tension d'alimentation haute.

La tension d'alimentation basse constitue à la fois une tension d'alimentation d'équipement utilisée pour alimenter les composants électriques de l'équipement électrique 13a, une tension d'alimentation de ventilateur utilisée pour alimenter le ventilateur de frein 12, une tension d'alimentation de capteur utilisée pour alimenter les capteurs 8, une tension d'alimentation de concentrateur de donnée utilisée pour alimenter le concentrateur de données 11, et une tension d'alimentation sortante.

La tension d'alimentation haute constitue à la fois une tension d'alimentation de freinage pour alimenter les actionneurs électromécaniques de freinage 4 et une tension d'alimentation d'entraînement pour alimenter l'actionneur électromécanique d'entraînement 7.

La tension d'alimentation haute est ici une tension continue de 540Vdc, mais pourrait être une tension différente, par exemple une tension continue de 200Vdc, de 270Vdc, de 300Vdc, etc. La tension d'alimentation basse est ici une tension continue de 28Vdc, mais pourrait être une tension différente, par exemple une tension continue de 10Vdc, de 15Vdc, etc.

L'unité d'alimentation 37 comporte aussi des moyens de protection 38. Les moyens de protection 38 empêchent une remontée de puissance de retour vers un système électrique de l'aéronef situé en amont de l'équipement électrique 13a. Par « en amont », on entend du côté du fuselage de l'aéronef, et non du côté de la roue 2a. Le système électrique en question comprend ici le cœur électrique 28 relié à l'équipement électrique 13a par le bus de haute puissance 26.

La puissance de retour peut par exemple être générée par des onduleurs de l'unité de conversion de puissance 40 (qui vont être évoqués ci-après). Les moyens de protection 38 absorbent cette puissance de retour.

L'unité d'alimentation 37 comporte aussi des moyens de surveillance qui surveillent le fonctionnement de l'unité d'alimentation 37.

L'équipement électrique 13a comporte de plus une unité de conversion de puissance 40. L'unité de conversion de puissance 40 comporte ici quatre organes de conversion de puissance 41, c'est à dire un par actionneur électromécanique de freinage 4. Chaque organe de conversion de puissance 41 comprend un onduleur et un module de communication numérique.

Chaque organe de conversion de puissance 41 est tout d'abord destiné à piloter un actionneur électromécanique de freinage 4 du frein 3 de la roue 2a.

Le module de communication numérique de l'organe de conversion de puissance 41 reçoit ainsi la commande de moteur de freinage (générée par l'unité de traitement 32) et la tension d'alimentation de freinage (c'est à dire la tension d'alimentation haute générée par l'unité d'alimentation 37), et produit à partir de la commande de moteur de freinage et de la tension d'alimentation de freinage une tension de pilotage de freinage à destination de l'actionneur électromécanique de freinage 4.

La tension de pilotage de freinage est une tension alternative triphasée.

L'un des organes de conversion de puissance 41 est aussi utilisé pour piloter l'actionneur électromécanique d'entraînement 7 du dispositif d'entraînement 6. Le module de communication numérique de cet organe de conversion de puissance 41 reçoit ainsi la commande de moteur d'entraînement (générée par l'unité de traitement 32) et la tension d'alimentation d'entraînement (c'est à dire la tension d'alimentation haute générée par l'unité d'alimentation 37), et produit à partir de la commande de moteur d'entraînement et de la tension d'alimentation d'entraînement une tension de pilotage d'entraînement à destination de l'actionneur électromécanique d'entraînement 7.

La tension de pilotage d'entraînement est une tension alternative triphasée.

On note que la tension de pilotage de freinage et la tension de pilotage d'entraînement sont identiques, de sorte que l'un des organes de conversion de puissance 41 peut bien être utilisé à la fois pour piloter un actionneur électromécanique de freinage 4 et l'actionneur électromécanique d'entraînement 7. Ceci est aussi rendu possible par le fait que les actionneurs électromécaniques de freinage 4 et les actionneurs électromécaniques d'entraînement 7 ne sont pas activés simultanément.

Chaque organe de conversion de puissance 41 comporte de plus des capteurs de paramètres électriques (courants, tension). Les mesures réalisées par les capteurs de paramètres électriques sont remontées par le module de communication numérique de l'organe de conversion de puissance 41 à l'unité de traitement 32.

L'équipement électrique 13a comporte aussi un bloc de filtrage 43, situé à la sortie de l'unité de traitement 32, de l'unité d'alimentation 37 et de l'unité de conversion de puissance 40. Le bloc de filtrage 43 permet de répondre aux exigences en matière de compatibilité électromagnétique et de résistance à la foudre spécifiées par le fabricant de l'aéronef.

L'équipement électrique 13a comporte en outre une unité de distribution. L'unité de distribution comporte une matrice de contacteurs 45 comprenant des entrées, des sorties, et des entrées/sorties.

Une sortie de l'unité d'alimentation 37 est reliée, via le bloc de filtrage 43, à une entrée El de la matrice de contacteurs 45. La tension d'alimentation basse est appliquée sur cette entrée El.

Les sorties des quatre organes de conversion de puissance 41 de l'unité de conversion de puissance 40 sont reliées chacune à une entrée E2 distincte de la matrice de contacteurs 45. La tension de pilotage de freinage, qui est aussi la tension de pilotage d'entraînement, est appliquée sur chacune de ces entrées E2.

Une sortie de l'unité de traitement 32 est reliée à une entrée/sortie E/S1 de la matrice de contacteurs 45. L'unité de traitement 32 échange des données analogiques ou numériques via cette entrée/sortie E/S1.

Une sortie S1 de la matrice de contacteurs 45 est reliée au ventilateur de frein 12 via le câble de basse puissance 19. Une sortie S2 de la matrice de contacteurs 45 est reliée aux capteurs 8 via les câbles de basse puissance 20. Une sortie S3 de la matrice de contacteurs 45 est reliée au concentrateur de données 11 via le câble de basse puissance 23. Pour chacun des quatre actionneurs électromécaniques de freinage 4, une sortie S4 de la matrice de contacteurs 45 est reliée audit actionneur électromécanique de freinage 4 via un câble de haute puissance 15, et une entrée/sortie E/S2 de la matrice de contacteurs 45 est reliée audit actionneur électromécanique de freinage 4 via un câble de communication analogique 16.

Une sortie S5 de la matrice de contacteurs 45 est reliée au dispositif d'entraînement 6 via le câble de haute puissance 17, et une entrée/sortie E/S3 de la matrice de contacteurs 45 est reliée au dispositif d'entraînement 6 via le câble de communication analogique 18.

Une entrée/sortie E/S4 de la matrice de contacteurs 45 est reliée à un port d'entrée/sortie 46 de l'équipement électrique 13a, qui est relié, via le bus de basse puissance 34, à l'autre équipement électrique 13b.

La matrice de contacteurs 45 est configurable par l'unité de traitement 32.

Lorsque l'unité de traitement 32 reçoit une consigne de freinage, la matrice de contacteurs 45 peut être configurée pour que l'équipement électrique 13a commande un freinage de la roue 2a. La matrice de contacteurs 45 distribue alors la tension de pilotage de freinage produite par chaque organe de conversion de puissance 41 à l'un des actionneurs électromécaniques de freinage 4. Des données analogiques sont échangées via les câbles de communication analogique 16, les entrées/sorties E/S2 et l'entrée/sortie ES1 de la matrice de contacteurs 45, entre l'unité de traitement 32 et les actionneurs électromécaniques de freinage 4.

Lorsque l'unité de traitement 32 reçoit une consigne de roulage au sol, la matrice de contacteurs 45 peut être configurée pour que l'équipement électrique 13a commande un entraînement de la roue 2a. La matrice de contacteurs 45 distribue alors la tension de pilotage d'entraînement produite par l'un des organes de conversion de puissance 41 au dispositif d'entraînement 6 et donc à l'actionneur électromécanique d'entraînement 7.

Des données analogiques sont échangées, via le câble de communication analogique 18, l'entrée/sortie E/S3 et l'entrée/sortie E/S1 entre l'unité de traitement 32 et le dispositif d'entraînement 6.

Bien sûr, la transmission de puissance et les échanges de données avec le dispositif d'entraînement 6 ne concernent que l'équipement électrique qui est en charge du pilotage du roulage au sol, c'est-à-dire, en mode normal, l'équipement électrique 13a, ou, dans un cas de panne de l'équipement électrique 13a, l'équipement électrique 13b. En cas de panne de l'équipement électrique 13a, c'est en effet l'autre équipement électrique 13b qui pilote le roulage au sol, c'est-à-dire qui alimente et commande l'actionneur électromécanique d'entraînement 7 du dispositif d'entraînement 6. Ainsi, en cas de perte de l'un des équipements électriques 13a, 13b, aucune perte ou dégradation de la fonction de roulage au sol n'est constatée.

En cas de panne de l'unité d'alimentation de l'autre équipement électrique 13b, la matrice de contacteurs 45 peut être configurée pour appliquer sur l'entrée/sortie E/S4 et donc sur le port d'entrée/sortie 46 une tension d'alimentation sortante. La tension d'alimentation sortante est la tension d'alimentation basse. Ainsi, l'équipement électrique 13a alimente l'autre équipement électrique 13b avec la tension d'alimentation sortante.

De même, en cas de panne de l'unité d'alimentation 37 de l'équipement électrique 13a, une tension d'alimentation entrante, provenant de l'autre équipement électrique 13b, est appliquée sur le port d'entrée/sortie 46 et sur l'entrée/sortie E/S4 de la matrice de contacteurs 45. L'équipement électrique 13a est alors alimenté grâce à la tension d'alimentation entrante fournie par l'autre équipement électrique 13b. La tension d'alimentation entrante est elle aussi égale à la tension d'alimentation basse.

On note que la transmission de la tension d'alimentation entrante et la transmission de la tension d'alimentation sortante utilisent le même bus de basse puissance 34.

La matrice de contacteurs 45 est configurée pour que, lorsque l'unité de traitement 32 reçoit une commande d'activation du ventilateur de frein 12, la matrice de contacteurs 45 applique la tension d'alimentation basse sur la sortie S1 de la matrice de contacteurs 45. La tension d'alimentation basse est alors transmise au ventilateur de frein 12 via le câble de basse puissance 19.

La matrice de contacteurs 45 est configurée en permanence de sorte que l'équipement électrique 13a alimente les capteurs 8 et le concentrateur de données 11. La matrice de contacteurs 45 applique donc la tension d'alimentation basse sur les sorties S2, S3 de la matrice de contacteurs 45. La tension d'alimentation basse est transmise aux capteurs 8 et au concentrateur de données 11 via les câbles de basse puissance 20, 23.

La matrice de contacteurs 45 peut aussi être configurée pour réaliser un délestage de charge, c'est-à-dire pour déconnecter un ou plusieurs actionneurs électromécaniques de freinage 4 ou le dispositif d'entraînement 6 ou l'un des autres équipements (ventilateur de frein 12, concentrateur de données 11, etc.). Un tel délestage de charge peut être nécessaire en cas de panne de l'un de ces équipements ou en cas de panne d'un équipement de l'ATA24 (cœur électrique 28, générateur d'énergie électrique, moyens de stockage d'énergie électrique, etc.).

Avantageusement, l'unité de traitement 32 et/ou l'unité d'alimentation 37 et/ou l'unité de conversion de puissance 40 et/ou l'unité de distribution sont des unités remplaçables en ligne. Ainsi, en cas de panne de l'une de ces unités ou dans le cas où une opération de maintenance est nécessaire, un opérateur au sol peut accéder facilement à l'unité en question grâce à la porte de l'armoire et procéder au dépôt de l'unité et à son remplacement.

Bien entendu, l'invention n'est pas limitée au mode de réalisation décrit mais englobe toute variante entrant dans le champ de l'invention telle que définie par les revendications.

Dans un équipement électrique, le nombre d'organes de conversion de puissance peut être différent.

La tension d'alimentation de freinage et la tension d'alimentation d'entraînement, tout comme la tension de pilotage de freinage et la tension de pilotage d'entraînement, peuvent être différentes. De même, la tension d'alimentation d'équipement, la tension d'alimentation de ventilateur, la tension d'alimentation de capteur, la tension d'alimentation de concentrateur de données et la tension d'alimentation sortante peuvent être différentes.

La tension de pilotage d'entraînement n'est pas nécessairement générée par un organe de conversion de puissance qui génère aussi la tension de pilotage de freinage. La tension de pilotage d'entraînement peut par ailleurs être générée par la mise en parallèle, réalisée par la matrice de contacteurs 45, d'un ou de plusieurs organes de conversion 41.

L'architecture présentée peut être différente. Il est par exemple possible d'avoir un seul équipement électrique par atterrisseur, un nombre différent d'actionneurs électromécaniques de freinage par frein, etc.

## Revendications

1. Equipement électrique destiné à être relié à au moins un actionneur électromécanique de freinage (4) agencé pour freiner une roue (2a, 2b) d'un atterrisseur (1) d'un aéronef et à au moins un actionneur électromécanique d'entraînement (7) agencé pour entraîner la roue en rotation, **caractérisé en ce que** l'équipement électrique (13a, 13b) comporte un boîtier (30), des moyens de fixation du boîtier à l'atterrisseur (1) et, à l'intérieur du boîtier :
- une unité de traitement (32) agencée pour générer une commande de moteur de freinage à partir d'une consigne de freinage et une commande de moteur d'entraînement à partir d'une consigne de roulage au sol ;
- une unité d'alimentation (37) agencée pour générer une tension d'alimentation d'équipement pour alimenter l'équipement électrique (13a, 13b), une tension d'alimentation de freinage et une tension d'alimentation d'entraînement ;
- une unité de conversion de puissance (40) agencée pour générer une tension de pilotage de freinage à partir de la commande de moteur de freinage et de la tension d'alimentation de freinage, et une tension de pilotage d'entraînement à partir de la commande de moteur d'entraînement et de la tension d'alimentation d'entraînement ;
- une unité de distribution agencée pour distribuer la tension de pilotage de freinage à l'actionneur électromécanique de freinage (4) et la tension de pilotage d'entraînement à l'actionneur électromécanique d'entraînement (7).

2. Equipement électrique selon la revendication 1, dans lequel le boîtier comporte une porte agencée pour permettre à un opérateur au sol d'accéder à l'intérieur du boîtier.

3. Equipement électrique selon la revendication 2, dans lequel l'unité de traitement (32) et/ou l'unité d'alimentation (37) et/ou l'unité de conversion de puissance (40) et/ou l'unité de distribution sont des unités remplaçables en ligne.

4. Equipement électrique selon la revendication 1, dans lequel un module de contrôle de freinage, un module de contrôle de moteur de freinage, un module de contrôle de roulage au sol et un module de contrôle de moteur d'entraînement sont programmés dans l'unité de traitement (32).

5. Equipement électrique selon la revendication 1, dans lequel l'unité d'alimentation (37) est aussi agencée pour générer une tension d'alimentation d'un concentrateur de données (11) et/ou d'un capteur (8) et/ou d'un ventilateur de frein (12) connectés à l'équipement électrique.

6. Equipement électrique selon la revendication 1, dans lequel l'unité de conversion de puissance (40) comporte une pluralité d'organes de conversion de puissance (41) comprenant chacun un onduleur.

7. Equipement électrique selon la revendication 1, dans lequel l'unité de distribution comporte une matrice de contacteurs (45) configurable par l'unité de traitement (32).

8. Equipement électrique selon la revendication 7, dans lequel la matrice de contacteurs (45) peut être configurée pour que l'équipement électrique commande un freinage de la roue ou un entraînement en rotation de la roue.

9. Equipement électrique selon la revendication 7, dans lequel la matrice de contacteurs (45) peut être configurée pour appliquer une tension d'alimentation sortante sur un port d'entrée/sortie (46) de l'équipement électrique (13a), la tension d'alimentation sortante étant destinée à alimenter un autre équipement électrique (13b) .

10. Equipement électrique selon la revendication 9, dans lequel la matrice de contacteurs (45) et le port d'entrée/sortie (46) sont agencés de sorte qu'une tension d'alimentation entrante, provenant de l'autre équipement électrique (13b), puisse être appliquée sur le port d'entrée/sortie de manière à alimenter l'équipement électrique (13a) en cas de panne de l'unité d'alimentation (37) de l'équipement électrique (13a).

11. Equipement électrique selon la revendication 7, dans lequel la matrice de contacteurs (45) peut être configurée pour réaliser un délestage de charge.

12. Equipement électrique selon la revendication 1, dans lequel l'unité d'alimentation (37) comporte des moyens de protection (38) agencés pour empêcher une remontée de puissance de retour vers un système électrique de l'aéronef situé en amont de l'équipement électrique (13a, 13b).

13. Système comportant deux équipements électriques (13a, 13b) selon l'une des revendications précédentes, un bus de communication (35) et un bus de puissance (34) reliant les deux équipements électriques, un actionneur électromécanique de freinage (4) et un actionneur électromécanique d'entraînement (7).

14. Atterrisseur comportant un système selon la revendication 13.

## Patentansprüche

1. Elektrische Ausrüstung, die dazu bestimmt ist, mit mindestens einem elektromechanischen Bremsaktor (4) verbunden zu werden, der ausgebildet ist, um ein Rad (2a, 2b) eines Fahrwerks (1) eines Luftfahrzeugs zu bremsen, sowie mit mindestens einem elektromechanischen Antriebsaktor (7), der ausgebildet ist, um das Rad in Drehung anzutreiben, **dadurch gekennzeichnet, dass** die elektrische Ausrüstung (13a, 13b) ein Gehäuse (30), Befestigungsmittel zum Befestigen des Gehäuses am Fahrwerk (1) und im Inneren des Gehäuses umfasst:
- eine Verarbeitungseinheit (32), die ausgebildet ist, um einen Bremsmotorbefehl anhand eines Bremssollwerts und einen Antriebsmotorbefehl anhand eines Rollsollwertes zu erzeugen;
- eine Versorgungseinheit (37), die ausgebildet ist, um eine Ausrüstungsversorgungsspannung zum Versorgen der elektrischen Ausrüstung (13a, 13b), eine Bremsversorgungsspannung und eine Antriebsversorgungsspannung zu erzeugen;
- eine Leistungsumwandlungseinheit (40), die ausgebildet ist, um eine Bremssteuerspannung anhand des Bremsmotorbefehls und der Bremsversorgungsspannung und eine Antriebssteuerspannung anhand des Antriebsmotorbefehls und der Antriebsversorgungsspannung zu erzeugen;
- eine Verteilungseinheit, die ausgebildet ist, um die Bremssteuerspannung auf den elektromechanischen Bremsaktor (4) und die Antriebssteuerspannung auf den elektromechanischen Antriebsaktor (7) zu verteilen.

2. Elektrische Ausrüstung nach Anspruch 1, bei der das Gehäuse eine Tür umfasst, die ausgebildet ist, um einer Bedienperson am Boden einen Zugang ins Innere des Gehäuses zu gestatten.

3. Elektrische Ausrüstung nach Anspruch 2, bei der die Verarbeitungseinheit (32) und/oder die Versorgungseinheit (37) und/oder die Leistungsumwandlungseinheit (40) und/oder die Verteilungseinheit vor Ort austauschbare Einheiten sind.

4. Elektrische Ausrüstung nach Anspruch 1, bei der ein Bremssteuermodul, ein Bremsmotorsteuermodul, ein Rollsteuermodul und ein Antriebsmotorsteuermodul in der Verarbeitungseinheit (32) programmiert sind.

5. Elektrische Ausrüstung nach Anspruch 1, bei der die Versorgungseinheit (37) ferner ausgebildet ist, um eine Versorgungsspannung zur Versorgung eines Datenkonzentrators (11) und/oder eines Sensors (8) und/oder eines Bremsventilators (12) zu erzeugen, die an die elektrische Ausrüstung angeschlossen sind.

6. Elektrische Ausrüstung nach Anspruch 1, bei der die Leistungsumwandlungseinheit (40) eine Vielzahl von Leistungsumwandlungselementen (41) umfasst, die jeweils einen Wechselrichter umfassen.

7. Elektrische Ausrüstung nach Anspruch 1, bei der die Verteilungseinheit eine Schaltmatrix (45) umfasst, die von der Verarbeitungseinheit (32) konfigurierbar ist.

8. Elektrische Ausrüstung nach Anspruch 7, bei der die Schaltmatrix (45) so konfiguriert werden kann, dass die elektrische Ausrüstung eine Bremsung des Rades oder einen Drehantrieb des Rades steuert.

9. Elektrische Ausrüstung nach Anspruch 7, bei der die Schaltmatrix (45) so konfiguriert werden kann, dass eine Ausgangversorgungsspannung an einem Eingangs-/Ausgangsport (46) der elektrischen Ausrüstung (13a) angelegt wird, wobei die Ausgangsversorgungsspannung dazu bestimmt ist, eine andere elektrische Ausrüstung (13b) zu versorgen.

10. Elektrische Ausrüstung nach Anspruch 9, bei der die Schaltmatrix (45) und der Eingangs-/Ausgangsport (46) so ausgebildet sind, dass eine Eingangsversorgungsspannung, die aus der anderen elektrischen Ausrüstung (13b) stammt, derart an dem Eingangs-/Ausgangsport angelegt werden kann, dass die elektrische Ausrüstung (13a) im Falle einer Störung der Versorgungseinheit (37) der elektrischen Ausrüstung (13a) versorgt wird.

11. Elektrische Ausrüstung nach Anspruch 7, bei der die Schaltmatrix (45) konfiguriert werden kann, um einen Lastabwurf durchzuführen.

12. Elektrische Ausrüstung nach Anspruch 1, bei der die Versorgungseinheit (37) Schutzmittel (38) umfasst, die ausgebildet sind, um eine Leistungsrückführung zurück zu einem elektrischen System des Luftfahrzeugs, das sich stromaufwärts der elektrischen Ausrüstung (13a, 13b) befindet, zu verhindern.

13. System, umfassend zwei elektrische Ausrüstungen (13a, 13b) nach einem der vorhergehenden Ansprüche, einen Kommunikationsbus (35) und einen Leistungsbus (34), der die beiden elektrischen Ausrüstungen verbindet, einen elektromechanischen Bremsaktor (4) und einen elektromechanischen Antriebsaktor (7).

14. Fahrwerk, umfassend ein System nach Anspruch 13.

## Claims

1. Electrical equipment intended to be connected to at least one electromechanical braking actuator (4) adapted to brake a wheel (2a, 2b) of an aircraft undercarriage (1) and to at least one electromechanical driving actuator (7) adapted to drive the wheel in rotation, **characterised in that** the electrical equipment (13a, 13b) includes a housing (30), means for fixing the housing to the undercarriage (1), and inside the housing:
- a processor unit (32) adapted to generate a braking motor control signal from a braking setpoint and a driving motor control signal from a taxiing setpoint;
- a power supply unit (37) adapted to generate an equipment power supply voltage for powering the electrical equipment (13a, 13b), a braking power supply voltage, and a driving power supply voltage;
- a power converter unit (40) adapted to generate a braking control voltage from the braking motor control signal and the braking power supply voltage, and a drive control voltage from the driving motor control signal and the driving power supply voltage;
- a distribution unit adapted to distribute the braking control voltage to the electromechanical braking actuator (4) and the drive control voltage to the electromechanical driving actuator (7).

2. Electrical equipment according to claim 1,
wherein the housing includes a door adapted to enable an operative on the ground to access the interior of the housing.

3. Electrical equipment according to claim 2,
wherein the processor unit (32) and/or the power supply unit (37) and/or the power converter unit (40) and/or the distribution unit are field-replaceable units.

4. Electrical equipment according to claim 1,
wherein a braking control module, a braking motor control module, a taxiing control module, and a driving motor control module are programmed in the processor unit (32).

5. Electrical equipment according to claim 1,
wherein the power supply unit (37) is also adapted to generate a power supply voltage for a data concentrator (11) and/or a sensor (8) and/or a brake fan (12) connected to the electrical equipment.

6. Electrical equipment according to claim 1,
wherein the power converter unit (40) includes a plurality of power converter members (41) each comprising an inverter.

7. Electrical equipment according to claim 1,
wherein the distribution unit includes a contactor array (45) configurable by the processor unit (32).

8. Electrical equipment according to claim 7,
wherein the contactor array (45) can be configured so that the electrical equipment controls braking of the wheel or driving of the wheel in rotation.

9. Electrical equipment according to claim 7,
wherein the contractor array (45) can be configured to apply an outgoing power supply voltage to an input/output port (46) of the electrical equipment (13a), the outgoing power supply voltage being intended to power another electrical equipment (13b).

10. Electrical equipment according to claim 9,
wherein the contactor array (45) and the input/output port (46) are such that an incoming power supply voltage coming from the other electrical equipment (13b) can be applied to the input/output port in such a manner as to power the electrical equipment (13a) in the event of failure of the power supply unit (37) of the electrical equipment (13a).

11. Electrical equipment according to claim 7,
wherein the contactor array (45) can be configured to perform load shedding.

12. Electrical equipment according to claim 1,
wherein the power supply unit (37) includes protection means (38) adapted to prevent power returning to an electrical system of the aircraft situated upstream from the electrical equipment (13a, 13b).

13. System including two electrical equipments (13a, 13b) according to any one of the preceding claims, a communication bus (35), and a power bus (34) connecting the two electrical equipments, an electromechanical braking actuator (4), and an electromechanical driving actuator (7) .

14. Undercarriage including a system according to claim 13.
